# EUROPEAN PATENT APPLICATION

(11) **EP 3 064 456 A1**
(43) Date of publication of application: **07.09.2016**
(21) Application number: 15157200.5
(22) Date of filing: 02.03.2015
(51) Int. Cl.: B65G 47/71

(54) **A deflection system for a multilane product distribution apparatus**

(71) Applicant: Tetra Laval Holdings & Finance S.A., 1009 Pully (CH)
(72) Inventor: Morselli, Alessandro, 41013 Piumazzo (IT); Capps, Eddie, Simpsonville, South Carolina 29681 (US); Williams, Brian, Simpsonville, South Carolina 29681 (US); Coulomb, Mathias N, Greenville, South Carolina 29615 (US)
(74) Representative: Tetra Pak - Patent Attorneys SE

(57) **Abstract**

Deflection system comprising: at least one handling element in the form of grippers advanced along an endless path over a conveyor belt that carries the articles to be deflected; at least one first upstream guiding track (30) to guide the movement of the grippers along and transversally of the conveying direction; at least two downstream guiding tracks (31); a switching element (41a) moved to selectively direct the gripper along one of the downstream guiding tracks (31); and a driving device (42) directly and actively controlling movement of the switching element (41a); the driving device (42) comprises an output member (43) which is selectively activated to oscillate about an axis (R) and is angularly coupled directly to the switching element (41a).

## Description

The present invention relates to a deflection system for a multilane product distribution apparatus which distributes a single row of products, in particular packages, containers or the like, into a plurality of rows.

The present invention may be advantageously but not exclusively used in plants for packaging pourable food products, such as beverages, milk, wine, tomato sauce, etc., in sealed packages, containers or the like, which are then packed in groups into packaging boxes.

The present description refers to this specific field, although this is in no way intended to limit the scope of protection as defined by the accompanying claims.

As known, the sealed packages or containers are formed, filled and closed in a machine or a combination of machines from which the sealed packages or containers are conveyed at first aligned in a single row and then in a plurality of adjacent and parallel rows towards an end packaging station, in which said sealed packages or containers are packaged in groups into packaging boxes.

The containers aligned in a single row are commonly distributed into a plurality of adjacent and parallel rows by a distribution apparatus, such as a multilane distribution apparatus, comprising at least one deflection system.

An example of a distribution apparatus of the above-described type is known from US 4,287,980 and basically comprises an inlet conveyor for advancing a plurality of packages in a single row and a deflection system adapted to interact with - in particular to temporarily grip and guide - the packages to distribute them into a plurality of parallel rows. The deflection system comprises a conveyor device, arranged above the packages moved by the inlet conveyor, and a plurality of gripper heads advanced by the conveyor device along an endless path, movably supported by the conveyor device itself transversally to such path and adapted to interact with respective packages to place them in parallel rows.

In particular, the conveyor device comprises a pair of chains passing round two pairs of toothed wheels and interconnected by transverse bars on which the gripper heads can slide freely.

The position of each gripper head on the respective bar is controlled by guiding means cooperating with the gripper head itself during its advancement along the path defined by the conveyor device.

The guiding means comprise a first guiding track and selectively two secondary guiding tracks which are arranged downstream of the first guiding track with respect to the advancement direction of the gripper heads.

The guiding means further comprise a switch which is arranged between the primary guiding track and the secondary guiding tracks and is moved to alternatively direct the gripper head to one of the secondary guiding tracks.

In practice, each of the gripper heads advanced by the conveyor device cooperates with the switch in such a way to fork the respective path from being parallel to the first guiding track to being parallel to one of the secondary guiding tracks. More specifically, the gripper heads follow the primary guiding track and the selected secondary guiding track as they advance along the path defined by the conveyor device.

The switch comprises a needle having a tip facing upstream and pivoted at an intermediate point. The needle is configured to oscillate about its pivoted intermediate point between a first position in which it forces the gripper heads to follow a first one of the secondary guiding tracks and a second position in which it forces the gripper heads to follow the other secondary guiding tracks.

In this case, the displacement of the needle from the first position to the second position is produced by the interaction with each gripper head. In other words, advancement of one gripper head actuates the needle to move from the first position to the second position or vice versa as a function of the position in which the needle itself is currently set.

The needle always directs two following gripper heads to one and the other secondary guiding track. By proceeding along the path, each secondary guiding track is further divided into tertiary guiding tracks by a relative switch of the same kind as the one provided between the primary guiding track and the secondary guiding tracks. Essentially, each guiding track arranged downstream of the secondary guiding tracks may, by relying on a switch of the kind described above, fork into two consecutive guiding tracks.

However, due to its particular construction, this distribution apparatus has a series of drawbacks.

In particular, the passive actuation of the switches necessarily produces a limitation of the processing speed.

In addition, the described switches have reduced flexibility, allowing only a distribution of packages in predefined manners given by alternate movement of each needle from the first position to the second position and vice versa.

Furthermore, the switches shown in US 4,287,980 only allow to fork one guiding track into two further guiding tracks. Therefore, they are not suitable for dividing one single row of packages or containers into more than two parallel rows.

Finally, any malfunction of the switches may inevitably result in damaging the whole distribution apparatus.

Another deflection system for a product distribution apparatus is known from EP-A-1125872 and basically comprises, similar to the deflection system of US 4,287,980, a conveyor device, arranged above a single row of products to be distributed, and a plurality of gripper heads advanced by the conveyor device along an endless path, movably supported by the conveyor device itself transversally to such path and adapted to interact with respective packages to place them in parallel rows.

As well, this conveyor device comprises two chain conveyors arranged side by side and vertically oriented. Respective chains of these chain conveyors are interconnected by transverse bars on which the gripper heads are mounted. The gripper heads are further adapted to freely slide on the transverse bars.

Further, the gripper heads are configured to cooperate with guiding means which define positioning of the gripper heads on the transverse bars.

The guiding means comprise a primary guiding track and a plurality of secondary guiding tracks forking from the primary guiding track at respective forking points in turn placed one after the other along the primary guiding track and spaced apart. The primary guiding track and the secondary guiding tracks lie in a common plane.

The guiding means further comprise a plurality of switches; each of them is arranged above a respective forking point and defines a deflection channel open at the bottom and at its opposite ends.

Each switch is adapted to oscillate between two positions. In one position, the respective deflection channel lies solely over a respective portion of the primary guiding track so allowing the packages or containers to proceed parallel to the first guiding track towards the next forking point; in the other position, the deflection channel lies over a respective limited portion of the primary guiding track and a portion of the respective secondary guiding track so allowing the packages or containers to be deviated parallel to this latter secondary guiding track.

Each switch is driven by a respective servomotor through a transmission system comprising rocker arms and rods.

The particular realization of this distribution apparatus comes along with a series of drawbacks.

In particular, the described switches have complicated actuation devices inevitably resulting in a limitation of operability and processing speed.

Further, it may be noted that, for each secondary guiding track, one deflection element is required along with its actuation device; the resulting apparatus is therefore rather complex, with a consequent high number of possible control issues and error sources.

Another aspect can be seen in the fact that any kind of malfunction of the switches may lead to a mechanical breakdown and therewith a significant interference with operability and processing requirements.

It is therefore an object of the present invention to provide a deflection system for a product distribution apparatus which allows overcoming at least one of the aforementioned drawbacks.

According to the present invention, there is provided a deflection system as claimed in claim 1.

A preferred, non-limiting embodiment of the present invention will be described by way of example with reference to the accompanying drawings, in which:
Figure 1 shows a perspective view of a product distribution apparatus comprising a deflection system according to the present invention, with parts removed for clarity;
Figure 2 shows a larger-scale bottom perspective view of the deflection system of Figure 1, with parts removed for clarity;
Figure 3 shows a larger-scale bottom view of the deflection system of Figure 2, with parts removed for clarity;
Figure 4 shows a larger-scale top plan view of the deflection system of Figure 1, with parts removed for clarity;
Figure 5 shows a larger-scale perspective view of a switching unit of the deflection system of Figure 3, in a first operative condition and with parts removed for clarity;
Figure 6 shows in greater details another larger-scale perspective view of the switching unit of Figure 5, with parts removed for clarity;
Figure 7a shows a larger-scale bottom plan view of the switching unit of Figures 5 and 6;
Figure 7b shows a larger-scale bottom plan view of the switching unit of Figures 5 and 6, in a second operative condition;
Figure 8 shows a larger-scale perspective view of another switching unit of the deflection system of Figure 3, in a first operative condition and with parts removed for clarity;
Figure 9 shows in greater details another larger-scale perspective view of the switching unit of Figure 8, with parts removed for clarity;
Figure 10a shows a larger-scale bottom plan view of the switching unit of Figures 8 and 9; and
Figures 10b and 10c show larger-scale bottom plan views of the switching unit of Figures 8 and 9, in a second and a third operative condition, respectively.

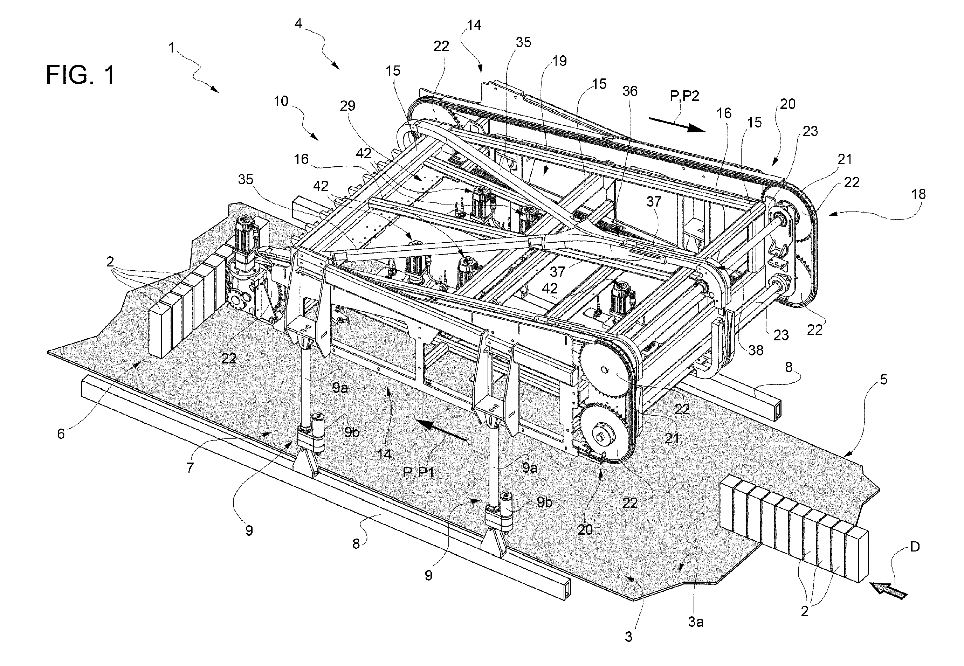

Number 1 in Figure 1 indicates as a whole a multilane distribution apparatus 1 adapted to distribute a single row of products, in the example shown sealed packages 2, into a plurality of adjacent and parallel rows.

Distribution apparatus 1 comprises a belt conveyor 3 (known per se and only shown in Figure 1 to the extent necessary to the comprehension of the present invention) for advancing packages 2 parallel to a longitudinal direction D, and a deflection system 4 adapted to interact with the packages 2 as they are advanced by belt conveyor 3 so as to possibly change their transverse positions on the belt conveyor 3 itself.

Belt conveyor 3 comprises a horizontal transport branch 3a, along which packages 2 rest as they are advanced parallel to longitudinal direction D; in particular, transport branch 3a is parallel to longitudinal direction D.

Transport branch 3a of belt conveyor 3 receives packages 2 at an inlet section 5 and advances them parallel to longitudinal direction D towards an outlet section 6.

With reference to Figures 1 to 4, deflection system 4 basically comprises:
- a fixed support structure 7 mounted above transport branch 3a of belt conveyor 3 and resting on a pair of longitudinal rails 8 of belt conveyor 3 itself through a plurality of vertical struts 9; and
- an operative assembly 10 carried by support structure 7 and configured to interact from above with packages 2 advanced by belt conveyor 3 parallel to longitudinal direction D.

In particular, longitudinal rails 8 are arranged side by side and are parallel to longitudinal direction D in such a way that belt conveyor 3 is disposed in between them. Struts 9 are perpendicularly mounted in pairs on respective longitudinal rails 8 and connected thereto.

Each strut 9 comprises a vertical bar 9a and a height regulating mechanism 9b (known per se and not further described). In particular, height regulating mechanisms 9b are configured to raise or lower deflection system 4 with respect to transport branch 3a of belt conveyor 3 and as a function of the height of packages 2.

Support structure 7 basically comprises:
- a pair of opposite side frame portions 14, extending above respective longitudinal rails 8 and connected thereto by struts 9;
- a plurality of transverse structure bars 15 connecting side frame portions 14 to one another; and
- a plurality of stiffening longitudinal structure bars 16 interposed between side frame portions 14.

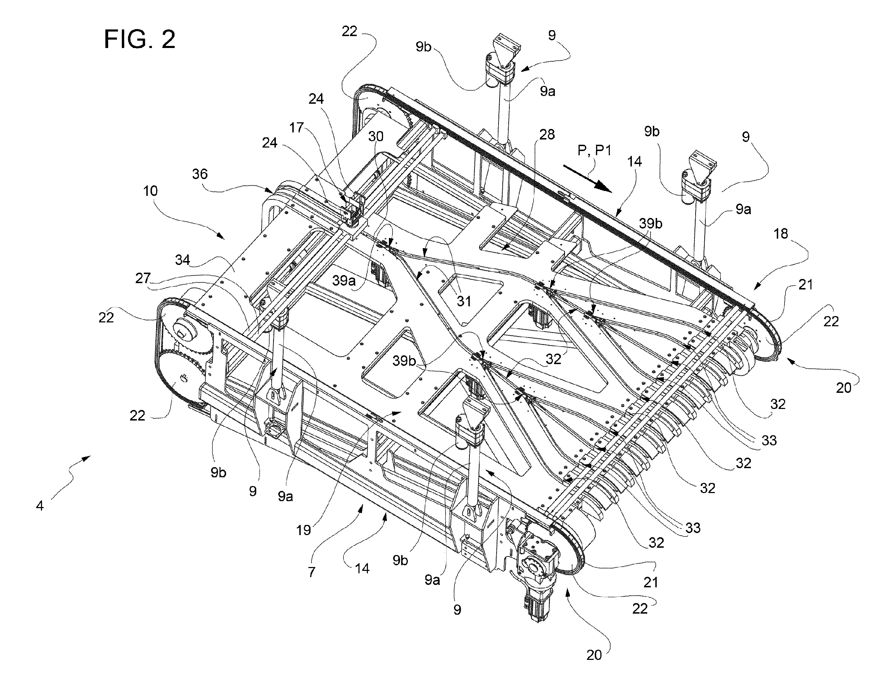

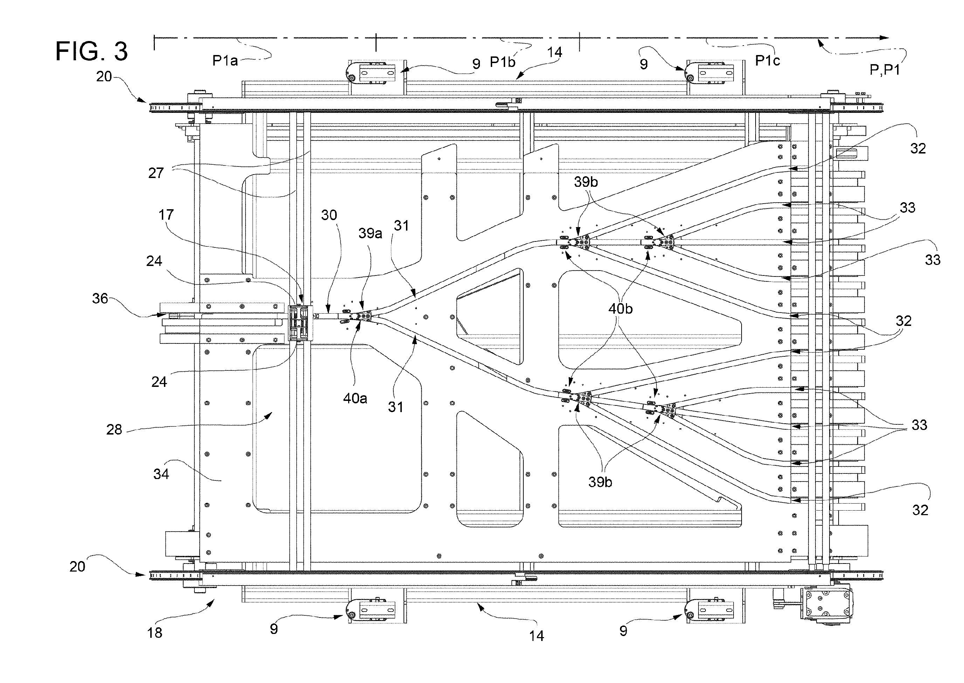

Operative assembly 10 comprises:
- a conveyor device 18 mounted on support structure 7 and advancing a plurality of package handling elements 17 (only one shown in Figures 2 and 3) along an endless path P having an operative branch P1, along which handling elements 17 interact with packages 2; and
- a guiding system 19 for guiding handling elements 17 during their movements along path P.

With particular reference to Figures 1 and 2, conveyor device 18 comprises two parallel conveyors 20 each mounted on one respective side frame portion 14 of support structure 7. In the example shown, conveyors 20 are of chain type; it is, however, clear that any other type of known conveyors may be used, such as belt conveyors.

Each conveyor 20 comprises an endless chain 21 extending around a plurality of toothed pulleys 22, at least one of them motorized; in particular, each chain 21 extends along a vertical plane and the respective toothed pulleys 22 have horizontally oriented axes, perpendicular to longitudinal rails 8 and longitudinal direction D. Additionally, corresponding toothed pulleys 22 of conveyors 20 are interconnected by respective transverse shafts 23.

With reference to Figures 2 and 3, each handling element 17 is supported by one or more parallel transverse bars 27, two in the example shown, and projects from the same. Each transverse bar 27 is connected at its opposite ends to chains 21 of both conveyors 20 and oriented perpendicular to longitudinal rail 8 and direction D.

Further, each handling element 17 is adapted to slide freely on its respective transverse bars 27, and hence is configured to slide in a direction perpendicular to longitudinal direction D and parallel to transport branch 3a of belt conveyor 3.

Each handling element 17 has two interacting portions 24 cooperating in use with opposite sides of a respective package 2 to move it transversally to longitudinal direction D, while such package 2 is advanced parallel to the longitudinal direction D.

With reference to Figures 1 to 4, guiding system 19 comprises:
- an operative guiding assembly 28 arranged between side frame portions 14 of support structure 7, facing transport branch 3a of belt conveyor 3 and adapted to direct advancement of handling elements 17 along operative branch P1 of path P from a single inlet lane to a plurality of outlet lanes;
- a return guiding assembly 29 arranged between side frame portions 14 of support structure 7 and above operative guiding assembly 28 and configured to guide movement of handling elements 17 along a return branch P2 of path P from the plurality of outlet lanes to the single inlet lane.

With reference to Figures 2 and 3, operative guiding assembly 28 comprises:
- a primary guiding track 30;
- two secondary guiding tracks 31 which fork from primary guiding track 30 and which are disposed downstream of primary guiding track 30;

- a plurality of tertiary guiding tracks 32, three in the example shown, which fork from each secondary guiding track 31 and which are disposed downstream of secondary guiding tracks 31; and
- a plurality of quaternary guiding tracks 33, three in the example shown, which fork from one or more tertiary guiding tracks 32, in the example shown from the central one of each group of tertiary guiding tracks 32.

Primary guiding track 30 is configured to advance handling elements 17 along a first portion P1a of operative branch P1. Additionally, primary guiding track 30 defines the inlet lane.

Secondary guiding tracks 31 are configured to interact with handling elements 17 along a second portion P1b of operative branch P1.

Tertiary guiding tracks 32 and quaternary guiding tracks 33 are adapted to guide handling elements 17 along a third portion P1c of operative branch P1. As well, tertiary guiding tracks 32 and quaternary guiding tracks 33 define the outlet lanes.

Primary guiding tracks 30, secondary guiding tracks 31, tertiary guiding tracks 32 and quaternary guiding tracks 33 are formed into a guiding plate 34. Further, primary guiding tracks 30, secondary guiding tracks 31, tertiary guiding tracks 32 and quaternary guiding tracks 33 are defined by grooves of guiding plate 34. As visible in Figures 2 and 3, guiding plate 34 is mounted on respective transverse structure bars 15 and longitudinal structure bars 16. Thus, guiding plate 34 is interposed between side frame portions 14. Further, guiding plate 34 is arranged so that primary guiding tracks 30, secondary guiding tracks 31, tertiary guiding tracks 32 and quaternary guiding tracks 33 face transport branch 3a of belt conveyor 3.

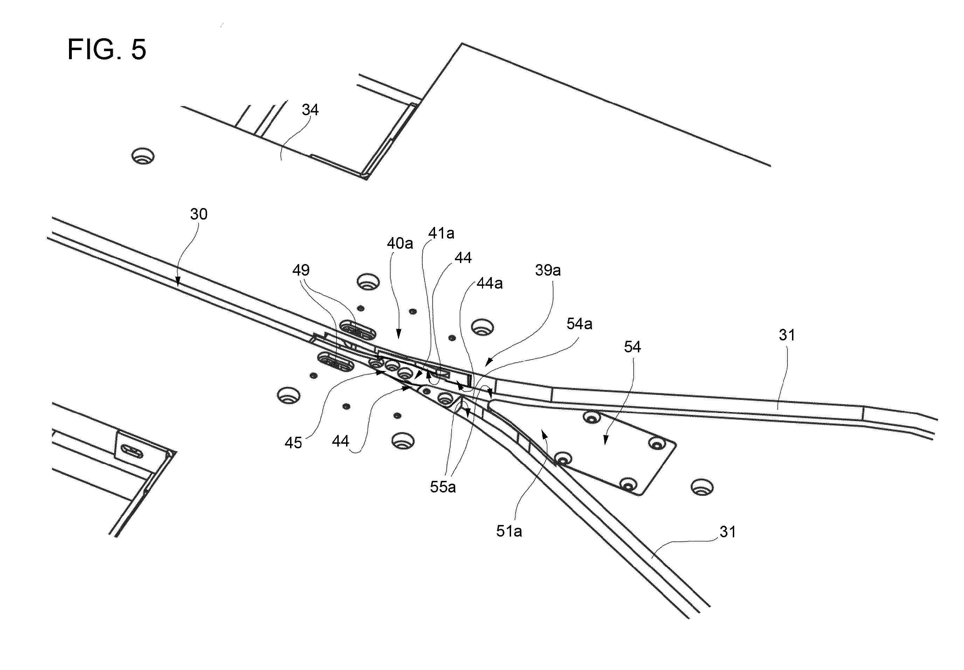

As indicated in Figure 5, secondary guiding tracks 31 have respective inlet portions 55a forking from primary guiding track 30 at a forking region 39a; in a completely analogous manner, tertiary guiding tracks 32 and quaternary guiding tracks, 33 have respective inlet portions 55b forking from respective secondary guiding tracks or tertiary guiding tracks at respective forking regions 39b.

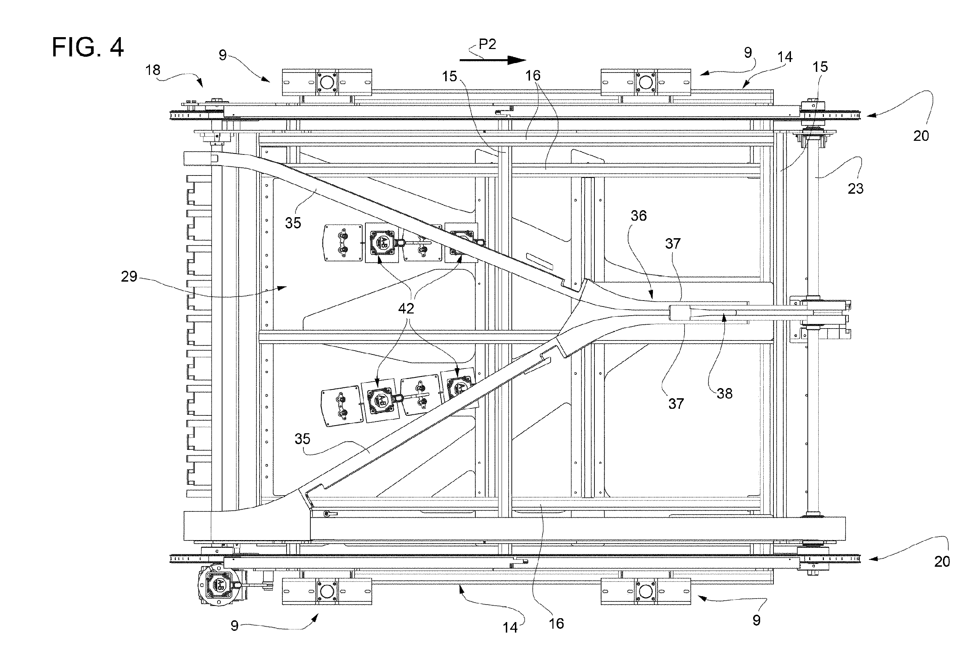

With reference to Figures 1 and 4, return guiding assembly 29 comprises:
- two converging guiding bars 35 to move handling elements 17 from any one of the outlet lanes towards the inlet lane; and
- a single track unit 36 which connects guiding bars 35 to primary guiding track 30.

In particular, guiding bars 35 converge into single track unit 36. Guiding bars 35 and single track unit 36 are adapted to interact with handling elements 17 advancing along return branch P2 of path P.

Single track unit 36 comprises two parallel guiding bars 37 extending from the respective guiding bars 35 and defining therebetween a guiding channel 38 for handling elements 17.

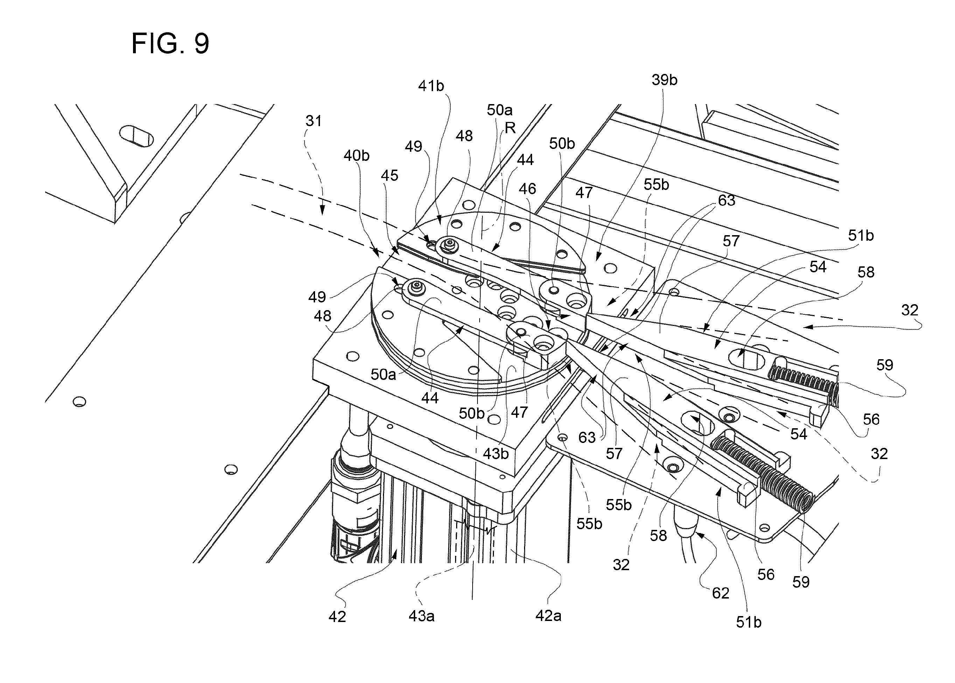

With reference to Figures 3 and 5 to 10c, operative guiding assembly 28 further comprises a first switching unit 40a, arranged at forking region 39a, and a plurality of second switching units 40b, arranged at forking regions 39b. As shown in Figures 5, 6, 7a and 7b, switching unit 40a comprises a switching element 41a for directing handling elements 17 from primary guiding track 30 to a selected one of secondary guiding tracks 31.

Switching unit 40a further comprises a driving device, in particular a servomotor 42, having an output member 43 angularly coupled directly to switching element 41a.

Servomotor 42 is mounted on guiding plate 34, extends away from belt conveyor 3 and is selectively activated to output member 43 about a vertical axis R, which is orthogonal to longitudinal direction D, to operative branch P1 of path P as well as to transport branch 3a of belt conveyor 3.

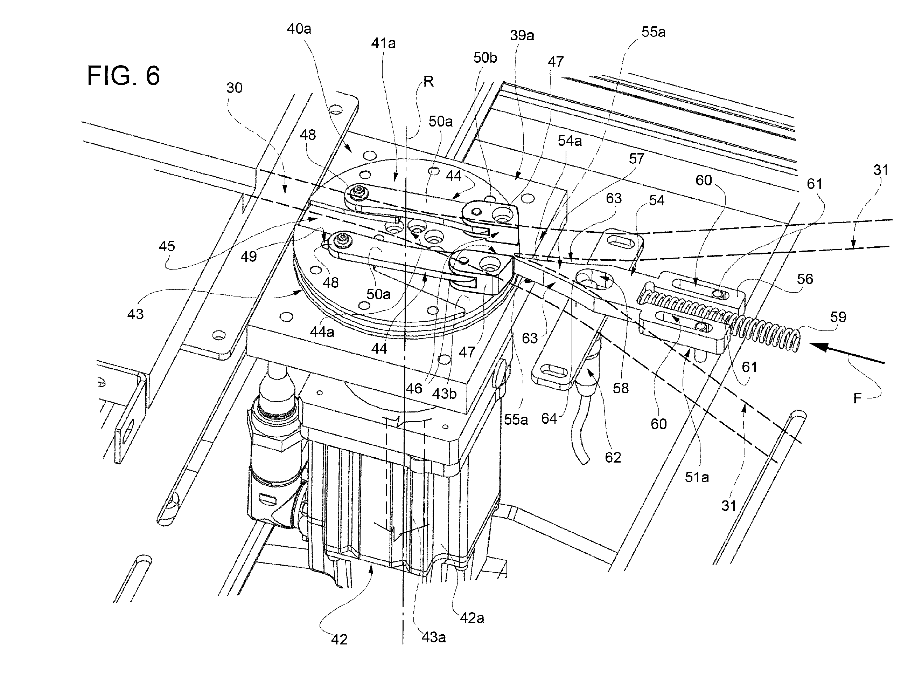

According to a preferred embodiment of deflection system 4, output member 43 comprises an output shaft 43a (only partially visible in Figure 6) of axis R, protruding from a casing 42a of servomotor 42, and an oscillation disk 43b angularly and coaxially secured to output shaft 43a as well as extending parallel to transport branch 3a of belt conveyor 3 and to guiding plate 34. In particular, oscillation disk 43b is arranged immediately above guiding plate 34.

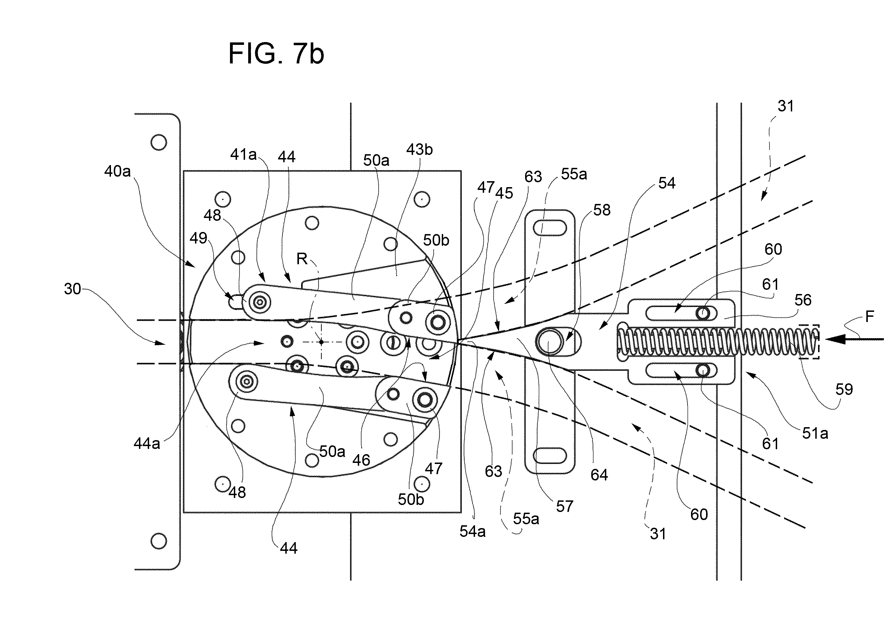

Switching element 41a comprises a pair of movable rail members 44 arranged side by side and defining therebetween a channel 44a. Rail members 44 lie on a common horizontal plane with the respective grooves of primary guiding track 30 and secondary guiding tracks 31 of guiding plate 34. In particular, rail members 44 are hosted in a respective recess (not visible in the enclosed Figures) of guiding plate 34. Further, rail members 44 are adapted to define a variable track portion 45 between primary guiding track 30 and secondary guiding tracks 31 at forking region 39a. More specifically, rail members 44 are adapted to define opposite side edges 46 of channel 44a of variable track portion 45. Each rail member 44 is connected to oscillation disk 43b in such a way that servomotor 42 is adapted to oscillate switching element 41a and to orient rail members 44 into a first position (Figures 5, 6 and 7a) and a second position (Figure7b).

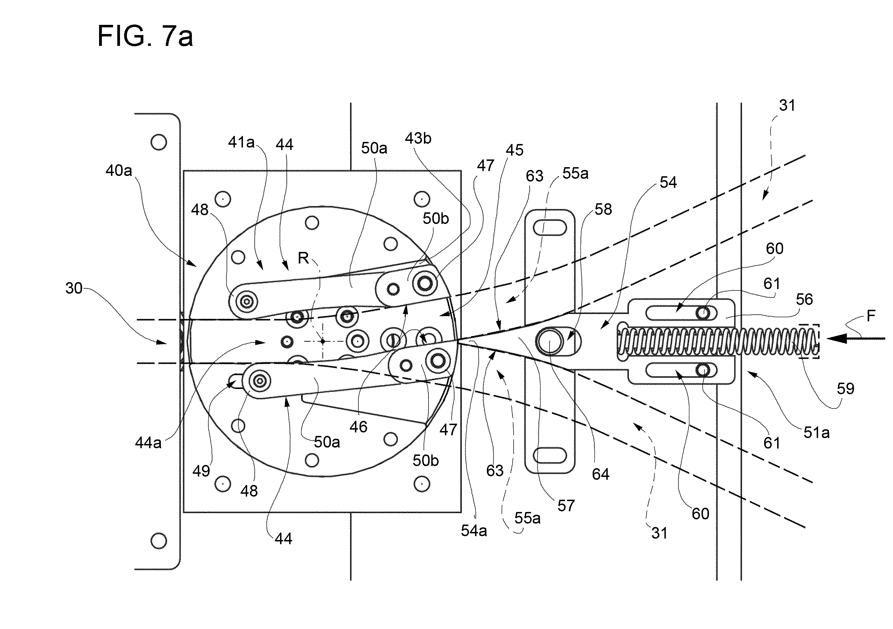

In particular, rail members 44 are configured to force handling elements 17 along variable track portion 45 to one of secondary guiding tracks 31 depending on whether rail members are 44 oriented in their first position or second position (see in particular Figures 7a and 7b).

More specifically, each rail member 44 has one end 48 adjacent to primary guiding track 30 and carried by guiding plate 34, and one opposite end 47 adjacent to secondary guiding tracks 31 and hinged to oscillation disk 43b. In particular, the end 48 is provided with a pin engaging, in a sliding manner, a through slot 49 carried by oscillation disk 43b and extending parallel to longitudinal direction D. More specifically, each rail member 44 comprises a first and second lever element 50a, 50b hinged to one another; lever element 50a defines the end 48 of the rail member 44 hinged to guiding plate 34; lever element 50b defines the opposite end 47 of the rail member 44 connected to oscillation disk 43b; in the example shown, lever element 50a has a greater length than lever element 50b.

Thus, each lever element 50b is configured to be actively controlled and actuated by oscillation disk 43b and correspondingly servomotor 42. In addition, each lever element 50a is adapted to perform a movement depending on actuation by lever element 50b. Movement of each lever element 50a is further guided by cooperation of the pin of the respective end 48 with the respective slot 49.

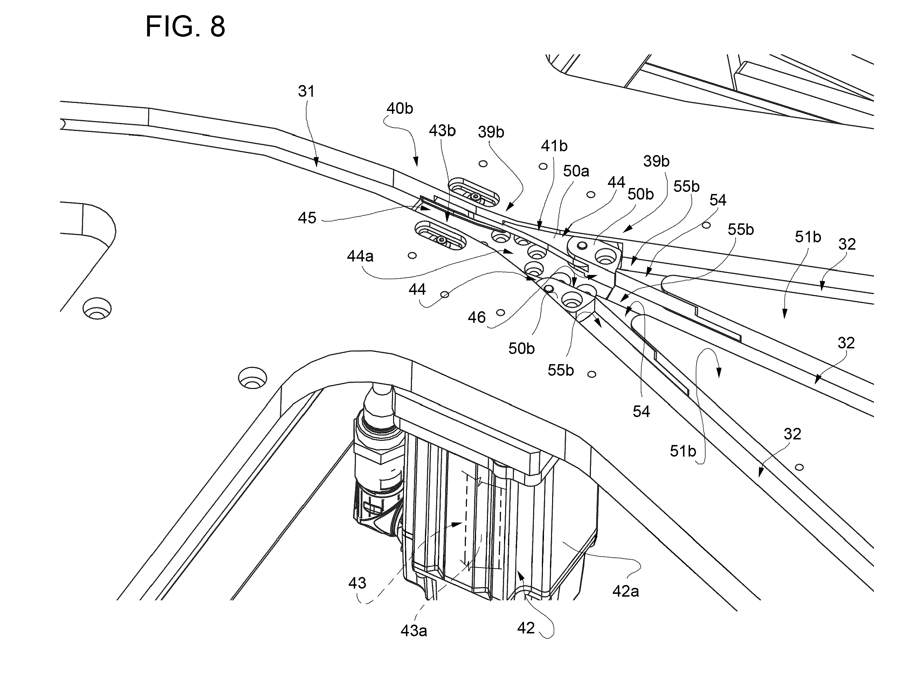

With reference to Figures 8 to 10c, each switching unit 40b essentially has the same configuration and components as switching unit 40a; for the sake of simplicity and conciseness, all components of switching unit 40b are indicated in the Figures with the same numerals as the corresponding ones of switching unit 40a. In the following only the main differences are described.

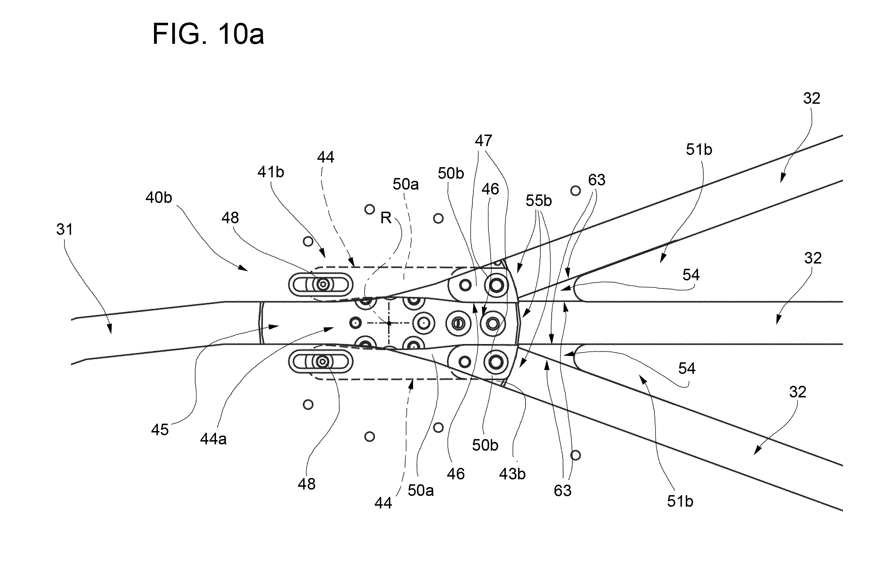

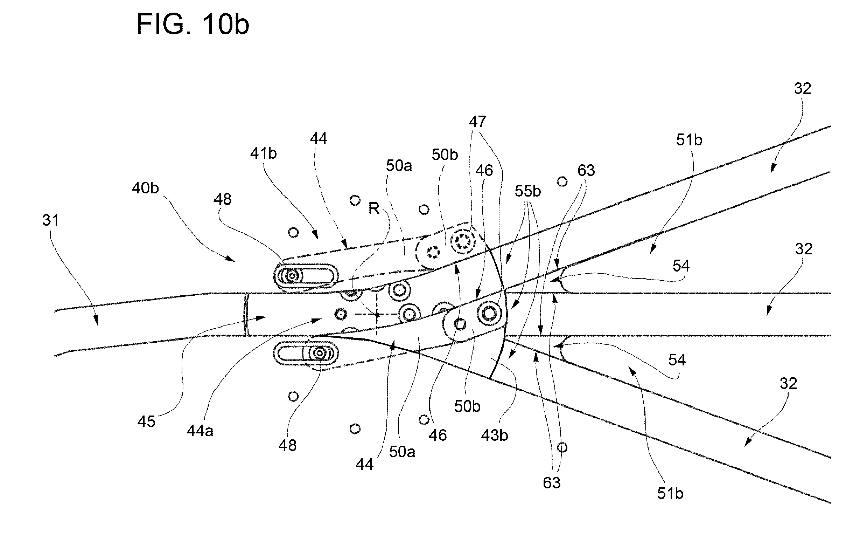

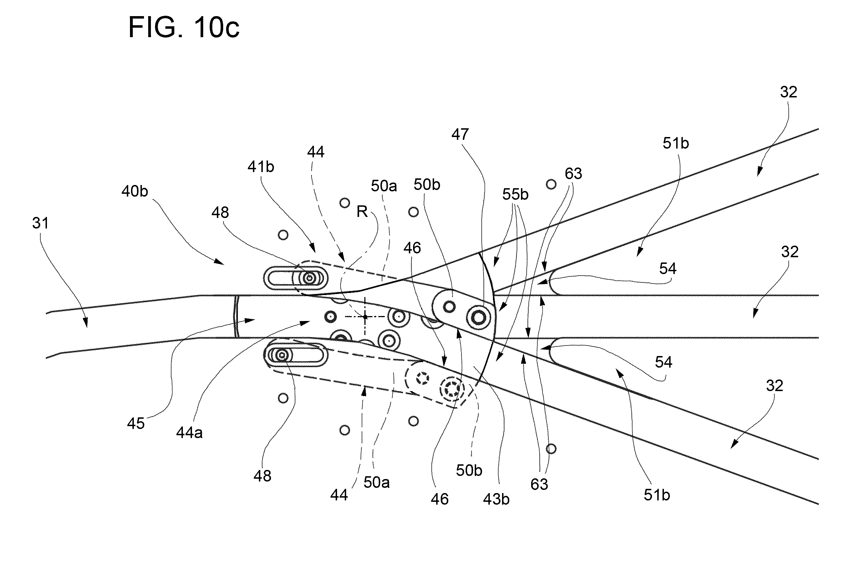

In particular, each switching unit 40b comprises a switching element 41b adapted to oscillate between three positions (see Figures 10a, 10b and 10c), namely a first position, a second position and a third position. The first position and second position are essentially equivalent to the first position and second position of switching element 41a. The third position of switching element 41b is intermediate between the first position and second position and allows the relative handling elements 17 to move from the upstream secondary guiding track 31 to the downstream tertiary guiding track 32 leading to the respective quaternary guiding tracks 33.

It must be understood that the functional principles of switching units 40a, 40b herein disclosed can be extended in such a way that the respective switching elements 41a, 41b may be set in more than three positions.

As shown in Figures 5 to 10c, operative guiding assembly 28 further comprises several impact-absorbing devices 51a, 51b positioned at respective forking regions 39a, 39b and immediately downstream of the respective switching elements 41a, 41b so as to elastically absorb possible impacts of handling elements 17 in case of any kind of malfunction and allowing such handling elements 17 to prosecute their advancement downstream of the impact.

In particular, impact-absorbing device 51a is positioned between the inlet portions 55a of secondary guiding tracks 31 and defines the adjacent side edges of the guiding tracks 31 joined at forking region 39a.

Impact-absorbing devices 51b are positioned between the inlet portions 55b of each pair of:
- adjacent tertiary guiding tracks 32; and
- adjacent quaternary guiding tracks 33.

Even in this case, each impact-absorbing device 51b defines the adjacent side edges of the inlet portions 55b of the relative pair of tertiary guiding tracks 32 or quaternary guiding tracks 33, joined at the relative forking region 39b.

Impact-absorbing devices 51a, 51b substantially have the same component and functional parts; hence, for the sake of simplicity and conciseness, only the impact-absorbing device 51a, placed between the secondary tracks 31, will be described hereafter in greater details; it is however intended that the same features illustrated with respect to impact-absorbing device 51a apply, mutatis mutandis, to the other impact-absorbing devices 51b placed between the respective tertiary guiding tracks 32 and quaternary guiding tracks 33.

With reference to Figures 6, 7a and 7b, impact-absorbing device 51a comprises a wedge-shaped plate element 54, having a tip end 54a facing switching element 41a and defining the adjacent side edges of the inlet portions 55a of secondary guiding tracks 31, and a helical spring 59 exerting an elastic force F on plate element 54 towards an advanced position (Figures 6 and 7a), closely adjacent to switching element 41a.

In particular, plate element 54 is supported by guiding plate 34 in a movable manner towards and away from switching element 41a; plate element 54 is retracted from its advanced position against the force of spring 59 in case of impact with a handling element 17.

Plate element 54 is coplanar with switching element 41a and includes a root portion 56, defining a recess for lodging spring 59, and a wedge-shaped portion 57, tapering from root portion 56 to tip end 54a.

More specifically, root portion 56 has one or more through linear slots 60, two in the example shown, engaged with play by respective pins 61 fixed to guiding plate 34; slots 60 are coupled in a sliding manner to respective pins 61 and perform in use a guiding function of plate element 54 towards and away from switching element 41a.

Spring 59 is interposed between root portion 56 of plate element 54 and a fixed surface (not shown) of guiding plate 34.

Wedge-shaped portion 57 is delimited by opposite sides 63 tapering to tip end 54a and defining the adjacent side edges of the inlet portions 55a of secondary guiding tracks 31.

Plate element 54 is configured to ensure guidance of handling elements 17 along one of secondary guiding tracks 31 in case of any kind of malfunction.

Impact-absorbing device 51a further comprises a sensor 62, such as of capacitive-, inductive- or optical-type, adapted to detect possible movements of plate element 54 due to impacts with handling elements 17.

In the example shown, sensor 62 has a detecting head 64 engaging with play an opening 58 formed through wedge-shaped portion 57 of plate element 54.

In use, handling elements 17 of deflection system 4 are driven by chain conveyors 21 along endless path P. Each handling element 17 advancing along operative branch P1 of path P interacts with a respective package 2 conveyed by belt conveyor 3 from inlet section 5 towards outlet section 6. In particular, each handling element 17 advancing along operative branch P1 interacts with the respective package 2 in such a way to transversally move such package 2 to the desired position on transport branch 3a of belt conveyor 3.

For the sake of clarity and simplicity, the following description will be referred to only one handling element 17 interacting with a corresponding package 2.

In particular, at first the handling element 17, interacting with the respective package 2 and advancing along operative branch P1, moves rectilinearly along first portion P1a until it reaches switching element 41a. At this point, handling element 17 is forced by switching element 41a to prosecute its travel along a selected one of secondary guiding tracks 32.

The position of switching element 41a, directly controlled by servomotor 42, determines which one of secondary guiding tracks 32 will be followed by the handling element 17.

In particular, rotation of output shaft 43a about axis R is directly transmitted to ends 48 of rail members 44, which align with the inlet portion 55a of the selected secondary guiding track 31.

As a result of the displacement imparted by the selected secondary guiding track 31, the handling element 17 shifts transversely on the respective transverse bars 27. As well, the respective package 2 follows the movement of the handling element 17 and, thus, is transversely shifted on transport branch 3a of belt conveyor 3.

Further on, the handling element 17 advances along second portion P1b of operative branch P1. The handling element 17 reaches the following forking region 39b, where it interacts with a respective switching element 41b. Analogously to what occurred at forking region 39a, the handling element 17 is forced by the position of the switching element 41b to prosecute its travel along a selected one of tertiary guiding tracks 32.

If the selected tertiary guiding track 32 is the central one, the handling element 17 will interact with another switching element 41b at the following forking region 39b to prosecute its travel along a selected one of the quaternary guiding tracks 33.

At the end of all these shifts, the handling element 17 will have positioned the respective package 2 at the desired position on transport branch 3a of belt conveyor 3.

Interaction between the handling element 17 and respective package 2 terminates at the end of operative branch P1 of path P; at this point, the package 2 continues to advance along direction D towards an end packaging station (known per se and not shown).

After having released the respective package 2, the handling element 17 advances along return branch P2 of endless path P. During this advancement, the handling element 17 interacts with one of respective guiding bars 35 and reaches single track unit 36 in such a way to be once again directed towards primary guiding track 30 to start another cycle of interaction with the next package 2.

By repeating the described operations on all packages 2 arriving in a single row at inlet section 5, they are distributed in a plurality of parallel rows depending on the number and type of forking regions 39a, 39b. Correct advancement of handling elements 17 may be hindered by any kind of malfunction. In such a case, one or more handling elements 17 may be not correctly forced towards the inlet portions 55a, 55b of the respective secondary guiding track 31, tertiary guiding track 32 or quaternary guiding tracks 33, leading to an interaction of such handling elements 17 with the respective plate elements 54 of impact-absorbing devices 51a, 51b.

In particular, the non-correctly guided handling element 17 hits the respective plate element 54, which is consequently retracted against the force exerted by the respective spring 59. Retraction of the plate element 54 permits the handling element 17 to prosecute its travel along one of the downstream guiding tracks, i.e. depending on the location of the impact, along one of the secondary guiding track 31, tertiary guiding track 32 or quaternary guiding tracks 33.

The retraction of the hit plate element 54 from its advanced position is detected by the respective sensor 62. Hence, an interruption of the operation of deflection system 4 may follow.

The advantages of deflection system 4 according to the present invention will be clear from the foregoing description.

In particular, switching units 40a, 40b of deflection system 4 are actively and directly controlled, i.e. without any transmission elements or levers, by the output members 43 of respective servomotors 42 allowing increased processing speeds.

In addition, deflection system 4 is highly flexible. Packages 2 originating from a single row can be distributed by deflection system 4 differently depending on the needs and requirements of an end processing station which is located downstream of outlet section 6. In particular, e.g. a number of packages 2 can be distributed first along one of the possible final rows, until this row reaches a desired number of packages 2, and then accumulated in another row. Otherwise, it is possible to act on the packages 2 arriving in a single row to distribute them one after the other in respective adjacent rows. Further, it must be noted, that any other permutation can be realized by the described deflection system 4.

Moreover, the direct and active control of switching elements 41a, 41b permits to reduce complexity of the deflection system 4 and to limit error sources.

Additionally, the number of adjacent rows obtainable is always greater than the required number of switching units 40a, 40b. This again reduces complexity of the control and the overall configuration of the deflection system 4.

As well, switching units 40b can be set into at least three positions and more positions can be easily obtained.

Finally, the presence of the plurality of impact-absorbing devices 51a, 51b ensures to instantly react to any kind of malfunction which may result into mechanically damages of the deflection system 4. The use of elastically-retractable, wedge-shaped plate elements 54 downstream of switching elements 41a, 41b allows to absorb possible impacts with the handling elements 17, to ensure prosecution of such handling elements 17 downstream of the impact and a safe shutdown of operation.

Clearly, changes may be made to deflection system 4 as described herein without, however, departing from the scope of protection as defined in the accompanying claims.

In particular, it is pointed out that deflection system 4 may comprise any other number and configuration of secondary guiding tracks 31, tertiary guiding tracks 32 and quaternary guiding tracks 33 in order to allow that packages 2 fed in a single row are distributed in any desired number of adjacent rows.

In addition, the deflection system 4 may also comprise further guiding tracks forking from quaternary guiding tracks 33 or from the non-forked tertiary guiding tracks 32.

## Claims

1. A deflection system (4) for a distribution apparatus (1) adapted to distribute a single row of products, in particular packages, into a plurality of rows, said deflection system (4) comprising:
- at least one handling element (17) advanced along an endless path (P) and adapted to interact with a relative product (2) along an operative branch (P1) of said path (P);
- at least one first guiding track (30, 31, 32) cooperating with said handling element (17) along said operative branch of said path (P);
- at least two downstream guiding tracks (31, 32, 33) arranged downstream of said first guiding track (30, 31, 32) with respect to said path (P), forking from said first guiding track (30, 31, 32) at a forking region (39a, 39b) and selectively cooperating with said handling element (17) along the operative branch (P1) of the path (P) itself;
- a switching element (41a, 41b), which is arranged at said forking region (39a, 39b) between said first guiding track (30, 31, 32) and said downstream guiding tracks (31, 32, 33) and which is moved to selectively direct said handling element (17) along one of said downstream guiding tracks (31); and
- a driving device (42) actively controlling movement of said switching element (41a, 41b);
**characterized in that** said driving device (42) comprises an output member (43) which is selectively activated to oscillate about an axis (R), transversal to said operative branch (P1) of said path (P), and is angularly coupled directly to said switching element (41a, 41b).

2. The system as claimed in claim 1, wherein said driving device is a servo-motor (42).

3. The system as claimed in claim 2, wherein said output member (43) comprises an output shaft (43a) of said servo-motor (42) and an oscillation head (43b) coaxially secured to said output shaft (43a) and coupled to said switching element (41a, 41b).

4. The system as claimed in claim 3, wherein said switching element (41a, 41b) comprises at least one movable rail member (44) having a first end (48) connected to fixed support means (34) and an opposite second end (47) hinged to said oscillation head (43b).

5. The system as claimed in claim 4, wherein said rail member (44) comprises a first and lever element (50a) and a second lever element (50b) hinged to one another and respectively defining said first end (48) and said second end (47) of said rail member (44).

6. The system as claimed in claim 4 or 5, wherein said switching element (41a, 41b) comprises two said movable rail elements (44) arranged side by side and defining a channel (44a) therebetween, along which said handling element (17) is guided from said first guiding track (30, 31, 32) to one of said downstream guiding tracks (31, 32, 33).

7. The system as claimed in any one of the foregoing claims, and further comprising at least one impact-adsorbing device (51a, 51b) positioned at said forking region (39a, 39b) as well as downstream of said switching element (41a, 41b) and elastically loaded towards said switching element (41a, 41b) so as to elastically absorb any possible impact with said handling element (17) in case of malfunction and to allow the impacting handling element (17) to prosecute its advancement downstream of the impact.

8. The system as claimed in claim 7, wherein said impact-absorbing device (51a, 51b) is arranged between inlet portions (55a) of said downstream guiding tracks (31, 32, 33) and defines adjacent side edges of said downstream guiding tracks (31, 32, 33) joined at said forking region (39a, 39b).

9. The system as claimed in claim 7 or 8, wherein said impact-absorbing device (51a, 51b) comprises:
- a wedge-shaped element (54), having a tip end (54a) facing said switching element (41a, 41b) and defining adjacent side edges of said inlet portions (55a, 55b) of said downstream guiding tracks (31, 32, 33); and
- elastic means (59) exerting an elastic force (F) on said wedge-shaped element (54) towards an advanced position, closely adjacent to said switching element (41a, 41b);
said wedge-shaped element (54) being movable away from said switching element (41a, 41b) against the force (F) of said elastic means (59) in case of impact with said handling element (17).

10. The system as claimed in claim of claim 9, wherein said impact-absorbing device (51a, 51b) further comprises sensor means (62) to detect any possible movement of said wedge-shaped element (54) due to a possible impact with said handling element (17).

11. The system as claimed in any one of the foregoing claims, comprising at least three said downstream guiding tracks (32, 33) forking from said first guiding track (31, 32) at said forking region (39b).

12. The system as claimed in any one of the foregoing claims, and further comprising at least two further downstream guiding tracks (32, 33) forking from one or all of said downstream guiding tracks (31, 32)

13. The system as claimed in claim 11 or 12 when depending on claims 7 to 10, and further comprising one said impact-absorbing device (51a, 51b) positioned between the inlet portions (55a, 55b) of each pair of adjacent downstream guiding tracks (31, 32, 33).

14. The system as claimed in any one of the foregoing claims, and further comprising an endless conveyor device (18) advancing said handling element (17) along said path (P); and wherein said handling element (17) is supported by said conveyor device (18) in a movable manner transversally to said operative branch (P1) of said path (P).
